# EUROPEAN PATENT SPECIFICATION

(11) **EP 4 319 889 B1**
(45) Date of publication and mention of the grant of the patent: **07.10.2026**
(21) Application number: 22785162.3
(22) Date of filing: 28.03.2022
(51) Int. Cl.: A62C 31/28, A62C 35/68, B05B 15/65, F16L 41/02

(54) **FITTING**
FITTING
RACCORD

(30) Priority: 06.04.2021 US 202163171103 P
(43) Date of publication of application: 14.02.2024
(60) Divisional application: 24175158.5 / 4 389 302
(73) Proprietor: Victaulic Company, Easton, PA 18040 (US)
(72) Inventor: BARBOUR, Nicholas, Quakertown, PA 18951 (US); MADARA, Scott D., Nazareth, PA 18064 (US); BOWMAN, Matthew A., Palmer, PA 18045 (US)
(74) Representative: Meissner Bolte Partnerschaft mbB
(86) International application number: PCT/US2022/022154
(87) International publication number: WO 2022/216471

(56) References cited:
- WO-A1-2017/214418
- US-A- 5 609 212
- US-A1- 2016 123 507
- US-A1- 2018 056 318
- US-A1- 2018 056 318
- US-A1- 2018 222 027
- US-A1- 2018 304 110
- US-A1- 2019 175 968
- US-A1- 2021 031 064

## Description

### Cross Reference to Related Applications

This application is based upon and claims benefit of priority to US Provisional Application No. 63/171,103, filed April 6, 2021.

### Field of the Invention

This invention relates to threaded fittings for forming fluid tight joints.

### Background

The connection of threaded fluid control components such as sprinklers to tapered threaded fittings in a fire suppression system traditionally requires a sealing compound (known as "pipe dope") to be applied to the male threads of the component to ensure a fluid tight joint at the threaded engagement between fitting and component. A more modern approach to ensure a fluid tight joint involves wrapping the male threads in a sealing tape comprising polytetrafluoroethylene before engaging the component with the fitting. Some have even gone as far as to apply pipe dope to a taped fitting.

Those steps, intended to produce a fluid tight joint, require additional time, effort and expense to effect. Further, even with care taken in the implementation of those steps, fit up of sprinklers to fittings still results in some percentage of leaking joints which require correction. There is clearly an opportunity to improve the installation of threaded components by eliminating such steps while still maintaining a fluid tight joint.

US 2018/222027 A1 relates to a gasket installation tool for installing a gasket member within an internal gasket chamber of a sprinkler head adapter or fitting.

US 2018/056318 A1 relates to a plumbing fitting for use with a fire suppressing sprinkler system. The fitting includes a seal which is generally annular having an annular face surface which abuts against and forms a seal against a annular surface of a brass insert under compression of a sprinkler head when installed.

US 2019/175968 A1 discloses a sprinkler adapter for coupling a fire protection sprinkler to a fluid supply line. The adapter includes a gasket 26 in a gasket chamber, which has a holding portion and an expansion portion. The expansion portion defines an annular void or gap located axially adjacent the unloaded gasket.

### Summary

The present invention is defined in independent claims 1 and 14 as appended. Further preferable embodiments are given in the dependent claims.

### Brief Description of the Drawings

Figure 1 is a longitudinal sectional view of an example fitting and gasket according to the invention engaged with a sprinkler;
Figure 2 is a longitudinal sectional view of a portion of the fitting shown in Figure 1 on an enlarged scale;
Figure 3 is a longitudinal sectional view of the example gasket shown in Figure 1 on an enlarged scale;
Figures 4-7 are longitudinal sectional views illustrating installation of a component into the fitting according to the invention shown in Figure 1; and
Figures 8-12 are longitudinal sectional views of different example embodiments of fittings according to the invention.
Figures 13 and 14 are longitudinal sectional views of different fittings not according to the invention.

### Detailed Description

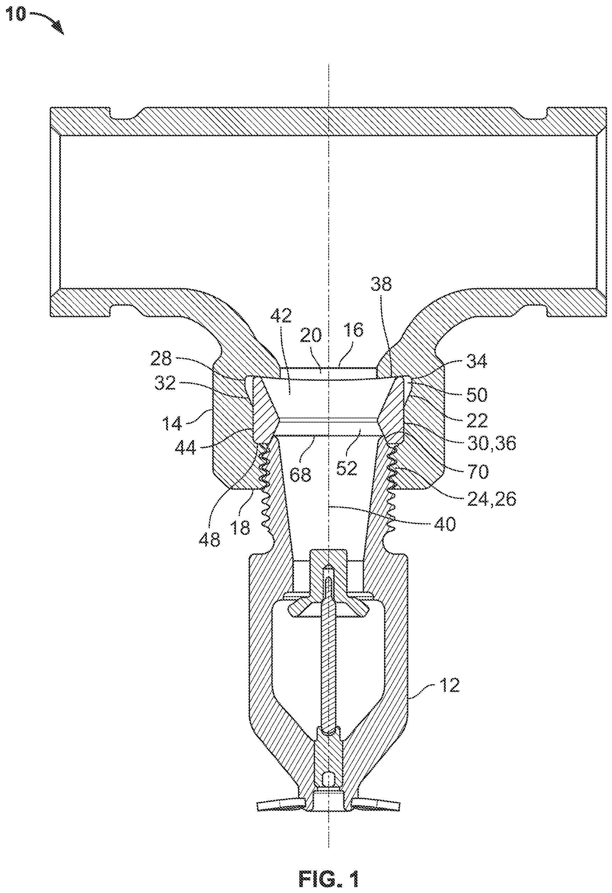

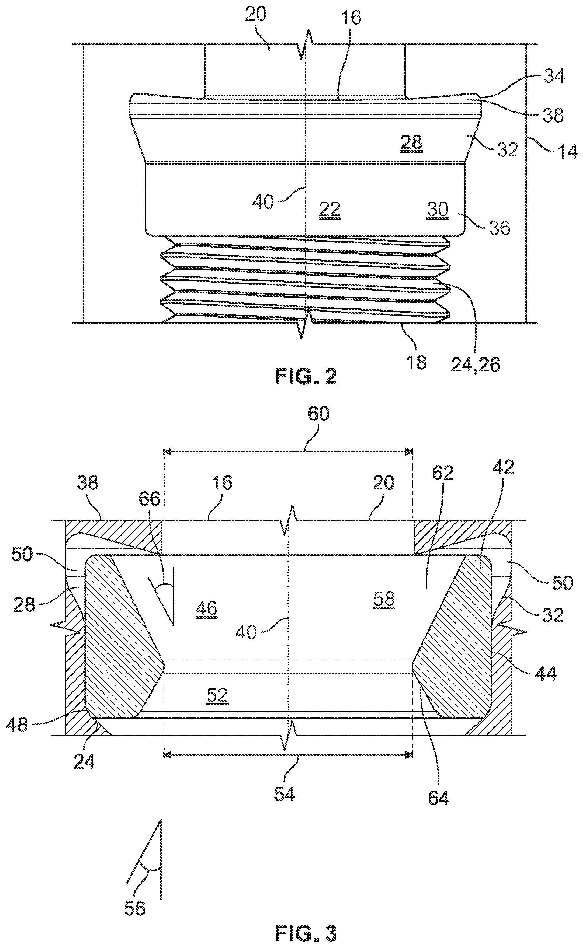

Figure 1 shows an example embodiment of a fitting 10 according to the invention. In this example the fitting 10 is a "Tee" for connecting fluid control devices, such as the example sprinkler 12 in a piping run (not shown). Example fitting 10 comprises a conduit 14 having an inlet 16 and an outlet 18 connected to one another via a bore 20. As shown in Figure 2, conduit 14 comprises a surface 22 surrounding and defining the bore 20. A first portion 24 of the surface 22 positioned proximate to the outlet 18 comprises female threads 26 extending along the bore 20. In this example, threads 26 are straight threads such as NPSL threads, which may be advantageously used to connect fitting 10 with fluid control devices such as sprinklers, which may have straight male threads. However, threads 26 could also be tapered threads. A second portion 28 of the surface 22 is positioned between the first portion 24 and the inlet 16. A third portion 30 of the surface 22 may be positioned between the first and second portions 24 and 28. The second portion 28 of surface 22 advantageously defines a truncated cone 32. The base 34 of the cone 32 is positioned proximate to the inlet 16. When present, the third portion 30 defines a substantially cylindrical shape 36.

A shoulder surface 38 is positioned at the inlet 16. Shoulder surface 38 projects into the bore 20 and faces the outlet 18. Shoulder surface 38 is oriented transversely and non-perpendicularly with respect to an axis 40 arranged coaxially with the bore 20 thereby providing a dovetail shape to the second portion 28 of surface 22 when viewed in longitudinal section as shown in Figures 1 and 2. This angular orientation of shoulder surface 38 guides the deformation behavior of a gasket 42 positioned within the bore 20 between the first and second portions 24 and 28 of surface 22 as described below.

Gasket 42 is advantageously formed of an elastomer such as EPDM and, as shown in Figure 3, comprises an outer surface 44 facing away from the axis 40 and an inner surface 46 facing the axis. In this example embodiment the outer surface 44 has a cylindrical shape with a radius of curvature substantially matched to that of the third portion 30 of surface 22. As shown in Figure 1, the outer surface 44 overlaps both the third and second portions 30, 28 of the surface 22, the length of the outer surface 44 of gasket 42 being greater than the length of the third portion 30 of surface 22. Gasket 42 is seated between the shoulder surface 38 and an undercut 48 marking a boundary between the first and third portions 24 and 30 of surface 22. Note that the truncated cone 32 defined by second portion 28 defines a redirection space 50 into which the gasket may deform when compressed.

As shown in Figure 3, the inner surface 46 of the gasket 42 comprises a first land 52 positioned proximate to the first portion 24 of surface 22 when installed in bore 20. The first land 52 is angularly oriented with respect to the axis 40 such that an inner diameter 54 of the gasket is greater at a point proximate to the first portion 24 than a point distal thereto. For a practical design, orientation angles 56 of first land 52 may range from 25° to 50° with an angle from about 30°- 45° being considered advantageous.

As further shown in Figure 3, the inner surface 46 of the gasket 42 may further comprise a second land 58 positioned proximate to the second portion 28 of surface 22. In this example the second land 58 is also angularly oriented with respect to the axis 40 but with a slope opposite of the first land such that an inner diameter 60 of the gasket 42 is greater at a point proximate to the inlet 16 than a point distal thereto. To provide pressure responsiveness to gasket 42 the second land 58 has a surface area 62 greater than a surface area 64 of the first land 52. Orientation angles 66 of the second land may range from 20° to 60° with an angle of about 25° being considered advantageous for a practical design.

As shown in Figure 1, the fitting 10 and gasket 42 may be used to attach tapered threaded sprinkler 12 or another fluid control component in a piping network of a fire suppression system for example. Sprinkler 12 is threadedly received within the bore 20 at the outlet 18, an end 68 of the sprinkler engaging the first land 52. The end 68 of the sprinkler 12 usually comprises a chamfer 70, and it is thought advantageous if the chamfer has an angular orientation the same as that of the first land 52.

When installed as described below, it is expected that a fluid tight seal between tapered threaded sprinkler 12 and fitting 10 will be achieved for straight threads 26 without the need for pipe tape or pipe dope.

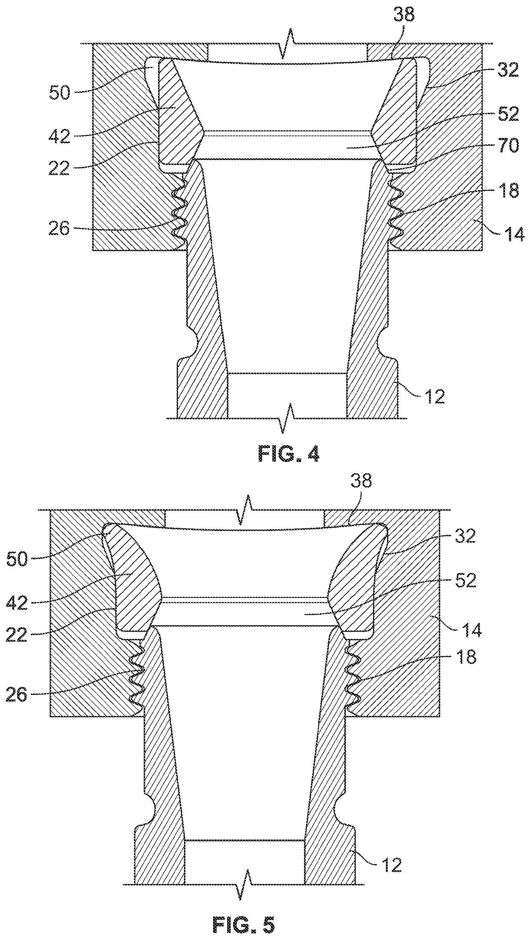

An example method of sealing the tapered threaded sprinkler 12 to the fitting 10 according to the invention begins as shown in Figures 1 and 4 by rotating the threaded sprinkler 12 within the straight threaded outlet 18 so as to advance the sprinkler into engagement with the angularly oriented first land 52 of the gasket 42. Figure 4 shows in detail first contact between the sprinkler 12 and the gasket 42. Note that the chamfer 70 engages the first land 52 at substantially the same orientation angle in this example.

Next, as shown in Figure 5, rotation of the threaded sprinkler 12 continues so as to compress the gasket 42 both longitudinally within the conduit 14 (compression against shoulder surface 38) and radially outwardly against the inner surface 22 of the conduit. The angular orientation of the first land 52 is responsible for the radial compression of the gasket 42 as the sprinkler 12 advances as is apparent from a resolution of the force vectors at the sprinkler-gasket interface. Figure 5 illustrates one full turn of the sprinkler 12 after first contact of Figure 4.

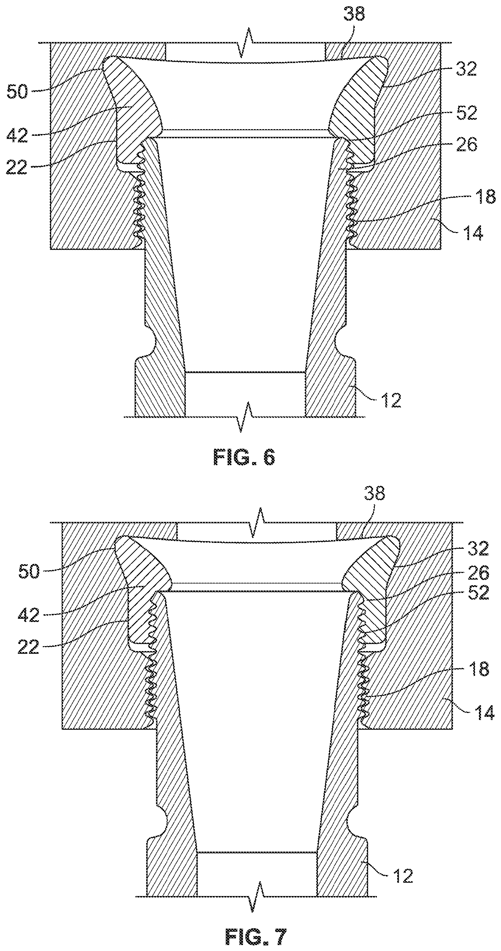

Figure 6 shows the sprinkler 12 seated within the conduit 14 and in sealing engagement. Note that the gasket 42, being substantially incompressible, has deformed into the redirection space 50 defined by the cone 32 of the inner surface 22. Deformation of the gasket 42 into the redirection space 50 is guided by the angular orientation of shoulder surface 38 against which the gasket is compressed. It is further observed that threads 26 of the sprinkler 12 engage the first land 52 and provide additional sealing effect. Figure 6 illustrates two full turns of the sprinkler 12 after first contact of Figure 4.

Figure 7 shows the sprinkler 12, gasket 42 and conduit 14 at three complete turns after first contact of Figure 4. While an effective seal is achieved at or before one turn after first contact, it is expected that the fitting 10 and gasket 42 according to the invention will maintain a fluid tight seal up to at least three turns past first contact, and may even provide additional sealing effect in this rotational range. The seal and fitting according to the invention is thus expected to permit advantageous adjustability of the angular position of the sprinkler 12 to effect desired orientation of the frame arms and deflector of the sprinkler without compromising the integrity of the seal. Axial position of the sprinkler relative to the fitting 10 is also adjustable using the seal and fitting according to the invention.

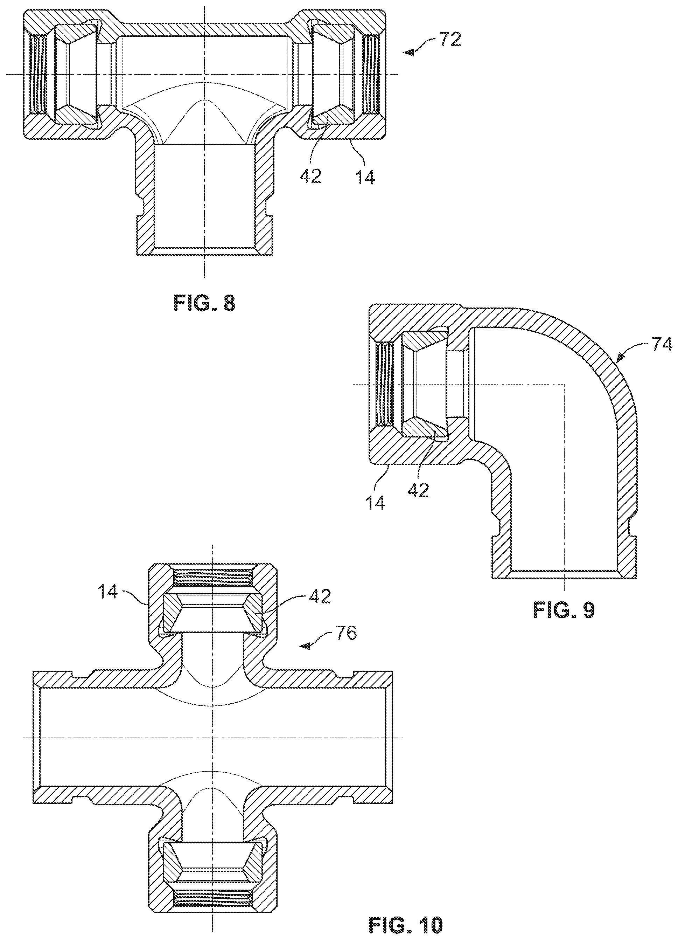

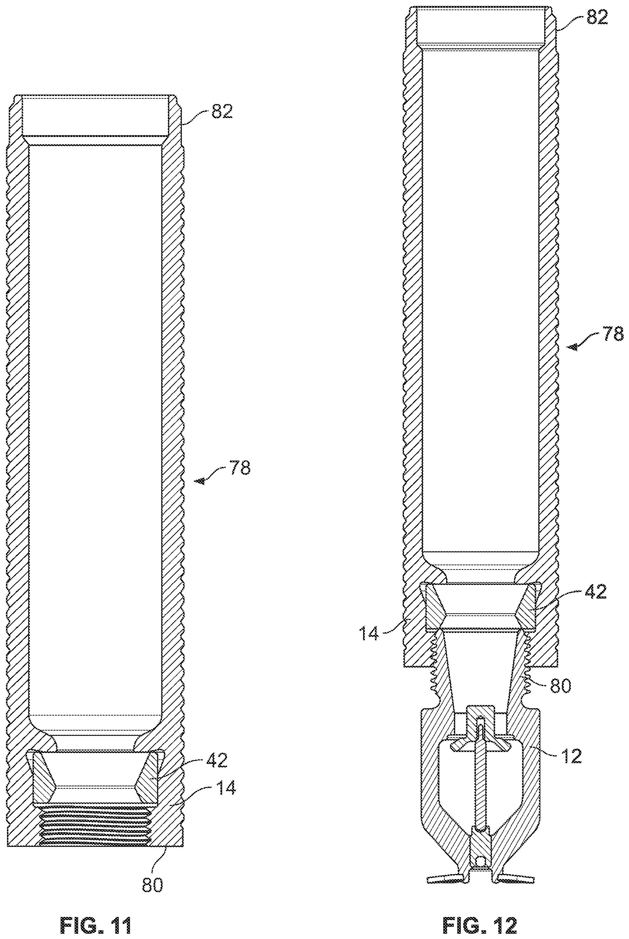

Figures 8-12 show additional example embodiments of fittings according to the invention including a Tee 72 having two conduits 14 and gaskets 42 (Figure 8), a 90° elbow fitting 74 having one conduit 14 and one gasket 42 (Figure 9), and a cross fitting 76 having two conduits 14 and two gaskets 42 in opposition (Figure 10). Figure 11 shows a cross section of a reducer fitting 78 which can receive a sprinkler 12 at one end 80 thereof. The opposite end 82 of reducer fitting 78 may be connected to a flexible conduit.

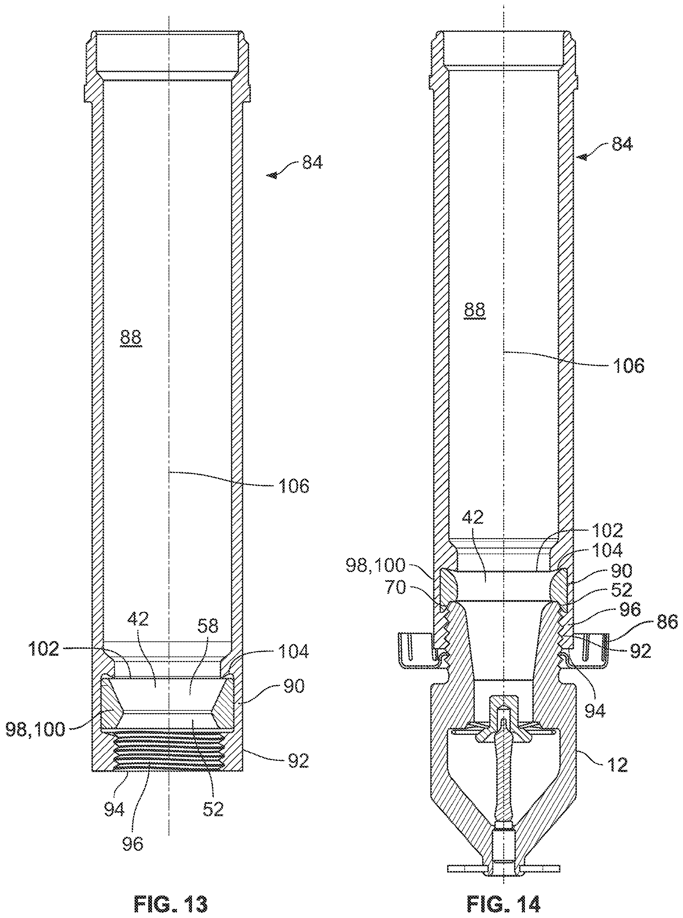

While it is advantageous for the example embodiments of the fittings shown in Figures 1-12 to comprise a redirection space 50, the example gasket 42 may be used effectively with fittings having no redirection space. An example embodiment of such a fitting 84 is shown in Figures 13 and 14. Example fitting 84 is a reducer fitting which is likely to be used with an escutcheon 86 when receiving a sprinkler 12 as shown in Figure 14. Figure 13 shows the reducer 84 wherein an example gasket 42 having lands 52 and 58 as described above is received within the bore 88 of fitting 84. A surface 90, which defines a portion of the bore 88, surrounds the gasket 42. Surface 90 comprises a first portion 92 positioned proximate to an outlet 94 of the fitting 84. Surface portion 92 comprises threads 96 to receive the threaded sprinkler 12 as shown in Figure 14. Unlike the previously described example embodiments, surface 92 does not comprise a truncated cone portion, but comprises a second portion 98 defining a cylindrical shape 100 positioned between the first portion 92 and an inlet 102. A shoulder surface 104 is positioned at the inlet 102 and projects into the bore 88. Shoulder surface 104 faces the outlet 94 and is oriented transversely and non-perpendicularly with respect to an axis 106 arranged coaxially with the bore 88. Shoulder surface 104 thus provides a dovetail shape to the second portion 98 when viewed in longitudinal section as shown in Figures 13 and 14. As shown in Figure 14, the angular orientation of the shoulder surface 104 guides the deformation behavior of gasket 42 when it is engaged by the sprinkler 12.

Figure 14 shows the sprinkler 12 sealingly seated against the gasket 42, the sprinkler's chamfer 70 engaging the gasket's first land 52. Gasket 42 is thus compressed against the shoulder surface 104, the gasket being securely fixed between the shoulder surface 104 and the sprinkler 12.

Seals and fittings according to the invention are expected to afford more reliable joints, with less tendency to leak while being usable with both tapered and straight threads without sealing tape or pipe dope. It is further expected that less time and effort will be needed to form the joints, as there will be less preparatory work and less torque is required to secure the components in a fluid-tight manner.

All of the embodiments of the claimed invention described herein are provided expressly by way of example only.

## Claims

1. A fitting (10), said fitting (10) comprising:
a conduit (14) having an inlet (16) and an outlet (18) connected to one another via a bore (20) extending therebetween, said conduit (14) comprising a surface (22) surrounding and defining said bore (20);
a first portion (24) of said surface (22) positioned proximate to said outlet (18) comprising threads (26) extending along said bore (20);
a second portion (28) of said surface (22) positioned between said first portion (24) and said inlet (16); and
a shoulder surface (38) positioned at said inlet (16) and projecting into said bore (20), said shoulder surface (38) facing said outlet (18) and oriented transversely and non-perpendicularly with respect to an axis (40) arranged coaxially with said bore (20),
**characterized in that**
the second portion (28) defines a truncated cone (32), wherein a base of said cone (32) is positioned proximate to said inlet (16), and said cone (32) defines a redirection space (50) within said bore (20).

2. The fitting (10) according to claim 1, further comprising a third portion (30) of said surface (22) positioned between said first and second portions (24, 28) thereof, said third portion (30) defining a cylindrical shape.

3. The fitting (10) according to one of the preceding claims, wherein said threads (26) comprise straight threads, in particular NPSL threads, or tapered threads.

4. The fitting (10) according to one of the preceding claims, further comprising a gasket (42) positioned within said bore (20) between said first and second portions (24, 28) of said surface (22), said gasket (42) comprising an outer surface (44) facing away from said axis (40) and an inner surface (46) facing said axis (40).

5. The fitting (10) according to claim 4, wherein said outer surface (44) of said gasket (42) has a cylindrical shape.

6. The fitting (10) according to claim 4 or 5, wherein said inner surface (46) of said gasket (42) comprises a first land (52) positioned proximate to said first portion (24) of said surface (22), said first land (52) being angularly oriented with respect to said axis (40) such that an inner diameter (54) of said gasket (42) is greater at a point proximate to said first portion (24) of said surface (22) than a point distal thereto.

7. The fitting (10) according to one of the claims 4 to 6, wherein said inner surface (46) of said gasket (42) further comprises a second land (58) positioned proximate to said second portion (28) of said surface (22), said second land (58) being angularly oriented with respect to said axis (40) such that an inner diameter (60) of said gasket (42) is greater at a point proximate to said inlet (16) than a point distal thereto, in particular wherein said second land (58) has a surface area (62) greater than a surface area (64) of said first land (52).

8. The fitting (10) according to claim 6, further comprising a sprinkler (12) or other fluid control component threadedly received within said bore (20) at said outlet (18), an end of said sprinkler (12) engaging said first land (52).

9. The fitting (10) according to claim 8, wherein said sprinkler (12) or other fluid control component comprises straight threads, in particular NPSL threads, or tapered threads.

10. The fitting (10) according to claim 8 or 9, wherein said end of said sprinkler (12) comprises a chamfer (70), said chamfer (70) having an angular orientation the same as that of said first land (52).

11. The fitting (10) according to one of the claims 8 to 10, wherein engagement between said sprinkler (12) and said first land (52) compresses said gasket (42) against said shoulder surface (38).

12. The fitting (10) according to claim 4, wherein said outer surface (44) of said gasket (42) has a length greater than a length of said third portion (30) of said surface (22).

13. The fitting (10) according to one of the preceding claims, wherein said fitting (10) comprises a reducer fitting, an elbow fitting, a tee fitting or a cross fitting.

14. A method of sealing a threaded sprinkler (12) to a fitting (10) according to one of the preceding claims, the fitting (10) defining a conduit (14) having a threaded outlet (18), wherein a gasket (42) is positioned within said conduit (14), said method **characterized by** comprising:
rotating said threaded sprinkler (12) within said threaded outlet (18) so as to advance said sprinkler (12) into engagement with an angularly oriented land of said gasket (42); and
continue rotating said threaded sprinkler (12) so as to compress said gasket (42) both longitudinally within said conduit (14) and radially outwardly against said conduit (14).

15. The method according to claim 13, further comprising engaging threads of said threaded sprinkler (12) with said land.

## Patentansprüche

1. Fitting (10), wobei das Fitting (10) umfasst:
einen Kanal (14) mit einem Einlass (16) und einem Auslass (18), die über eine Bohrung (20), die sich dazwischen erstreckt, miteinander verbunden sind, wobei der Kanal (14) eine Oberfläche (22) umfasst, die die Bohrung (20) umgibt und definiert;
einen nahe dem Auslass (18) positionierten ersten Abschnitt (24) der Oberfläche (22), der Gewindegänge (26) umfasst, die entlang der Bohrung (20) verlaufen;
einen zweiten Abschnitt (28) der Oberfläche (22), der zwischen dem ersten Abschnitt (24) und dem Einlass (16) positioniert ist; und
eine Schulterfläche (38), die an dem Einlass (16) positioniert ist und in die Bohrung (20) hineinragt, wobei die Schulterfläche (38) dem Auslass (18) zugewandt und quer und nicht senkrecht zu einer Achse (40) ausgerichtet ist, die koaxial mit der Bohrung (20) angeordnet ist,
**dadurch gekennzeichnet, dass**
der zweite Abschnitt (28) einen Kegelstumpf (32) definiert, wobei eine Basis des Kegels (32) nahe dem Einlass (16) positioniert ist und wobei der Kegel (32) einen Umlenkraum (50) innerhalb der Bohrung (20) definiert.

2. Fitting (10) nach Anspruch 1, ferner umfassend einen dritten Abschnitt (30) der Oberfläche (22), der zwischen dem ersten und dem zweiten Abschnitt (24, 28) derselben positioniert ist, wobei der dritte Abschnitt (30) eine zylindrische Form definiert.

3. Fitting (10) nach einem der vorhergehenden Ansprüche, wobei die Gewindegänge (26) gerade Gewinde, insbesondere NPSL-Gewinde, oder konische Gewinde umfassen.

4. Fitting (10) nach einem der vorhergehenden Ansprüche, ferner umfassend eine Dichtung (42), die innerhalb der Bohrung (20) zwischen dem ersten und dem zweiten Abschnitt (24, 28) der Oberfläche (22) positioniert ist, wobei die Dichtung (42) eine von der Achse (40) abgewandte Außenfläche (44) und eine der Achse (40) zugewandte Innenfläche (46) umfasst.

5. Fitting (10) nach Anspruch 4, wobei die Außenfläche (44) der Dichtung (42) eine zylindrische Form aufweist.

6. Fitting (10) nach Anspruch 4 oder 5, wobei die Innenfläche (46) der Dichtung (42) einen ersten Steg (52) umfasst, der nahe dem ersten Abschnitt (24) der Oberfläche (22) positioniert ist, wobei der erste Steg (52) derart winklig zur Achse (40) ausgerichtet ist, dass ein Innendurchmesser (54) der Dichtung (42) an einem Punkt in der Nähe des ersten Abschnitts (24) der Oberfläche (22) größer als an einem davon entfernten Punkt ist.

7. Fitting (10) nach einem der Ansprüche 4 bis 6, wobei die Innenfläche (46) der Dichtung (42) ferner einen zweiten Steg (58) umfasst, der nahe dem zweiten Abschnitt (28) der Oberfläche (22) positioniert ist, wobei der zweite Steg (58) derart winklig zur Achse (40) ausgerichtet ist, dass ein Innendurchmesser (60) der Dichtung (42) an einem Punkt in der Nähe des Einlasses (16) größer als an einem davon entfernten Punkt ist, insbesondere wobei der zweite Steg (58) einen Flächeninhalt (62) aufweist, der größer als ein Flächeninhalt (64) des ersten Stegs (52) ist.

8. Fitting (10) nach Anspruch 6, ferner umfassend einen Sprinkler (12) oder eine andere Fluidsteuerkomponente, die im Gewindeeingriff innerhalb der Bohrung (20) an dem Auslass (18) aufgenommen ist, wobei ein Ende des Sprinklers (12) mit dem ersten Steg (52) in Eingriff ist.

9. Fitting (10) nach Anspruch 8, wobei der Sprinkler (12) oder eine andere Fluidsteuerkomponente gerade Gewinde, insbesondere NPSL-Gewinde, oder konische Gewinde umfasst.

10. Fitting (10) nach Anspruch 8 oder 9, wobei das Ende des Sprinklers (12) eine Fase (70) umfasst, wobei die Fase (70) eine winklige Ausrichtung aufweist, die der des ersten Stegs (52) gleicht.

11. Fitting (10) nach einem der Ansprüche 8 bis 10, wobei der Eingriff zwischen dem Sprinkler (12) und dem ersten Steg (52) die Dichtung (42) gegen die Schulterfläche (38) zusammendrückt.

12. Fitting (10) nach Anspruch 4, wobei die Außenfläche (44) der Dichtung (42) eine Länge hat, die größer als eine Länge des dritten Abschnitts (30) der Oberfläche (22) ist.

13. Fitting (10) nach einem der vorhergehenden Ansprüche, wobei das Fitting (10) ein Reduzierstück, ein Kniestück, ein T-Stück oder Kreuzstück umfasst.

14. Verfahren zum Abdichten eines Sprinklers (12) mit Gewinde an einem Fitting (10) nach einem der vorhergehenden Ansprüche, wobei das Fitting (10) einen Kanal (14) mit einem Gewindeauslass (18) definiert, wobei eine Dichtung (42) innerhalb des Kanals (14) positioniert ist, wobei das Verfahren **dadurch gekennzeichnet ist, dass** es Folgendes umfasst:
Drehen des Sprinklers (12) mit Gewinde innerhalb des Gewindeauslasses (18), um den Sprinkler (12) in Eingriff mit einem winklig ausgerichteten Steg der Dichtung (42) vorwärtszubewegen; und
Weiterdrehen des Sprinklers (12) mit Gewinde, um die Dichtung (42) sowohl in Längsrichtung innerhalb des Kanals (14) als auch radial nach außen gegen den Kanal (14) zusammenzudrücken.

15. Verfahren nach Anspruch 14, ferner umfassend das Ineingriffbringen von Gewindegängen des Sprinklers (12) mit Gewinde mit dem Steg.

## Revendications

1. Raccord (10), ledit raccord (10) comprenant :
un conduit (14) présentant une entrée (16) et une sortie (18) reliées l'une à l'autre par l'intermédiaire d'un trou (20) s'étendant entre elles, ledit conduit (14) comprenant une surface (22) entourant et définissant ledit trou (20) ;
une première partie (24) de ladite surface (22) positionnée à proximité de ladite sortie (18) et comprenant des filetages (26) s'étendant le long dudit trou (20) ;
une deuxième partie (28) de ladite surface (22) positionnée entre ladite première partie (24) et ladite entrée (16) ; et
une surface d'épaulement (38) positionnée au niveau de ladite entrée (16) et faisant saillie dans ledit trou (20), ladite surface d'épaulement (38) faisant face à ladite sortie (18) et étant orientée transversalement et non perpendiculairement par rapport à un axe (40) agencé de manière coaxiale par rapport audit trou (20),
**caractérisé en ce que**
la deuxième partie (28) définit un cône tronqué (32), une base dudit cône (32) étant positionnée à proximité de ladite entrée (16) et ledit cône (32) définissant un espace de redirection (50) à l'intérieur dudit trou (20).

2. Raccord (10) selon la revendication 1, comprenant en outre une troisième partie (30) de ladite surface (22) positionnée entre lesdites première et deuxième parties (24, 28) correspondantes, ladite troisième partie (30) définissant une forme cylindrique.

3. Raccord (10) selon l'une des revendications précédentes, lesdits filetages (26) comprenant des filetages droits, en particulier des filetages NPSL, ou des filetages coniques.

4. Raccord (10) selon l'une des revendications précédentes, comprenant en outre un joint d'étanchéité (42) positionné à l'intérieur dudit trou (20) entre lesdites première et deuxième parties (24, 28) de ladite surface (22), ledit joint d'étanchéité (42) comprenant une surface externe (44) tournée à l'opposé dudit axe (40) et une surface interne (46) faisant face audit axe (40).

5. Raccord (10) selon la revendication 4, ladite surface externe (44) dudit joint d'étanchéité (42) présentant une forme cylindrique.

6. Raccord (10) selon la revendication 4 ou 5, ladite surface interne (46) dudit joint d'étanchéité (42) comprenant un premier méplat (52) positionné à proximité de ladite première partie (24) de ladite surface (22), ledit premier méplat (52) étant orienté angulairement par rapport audit axe (40) de telle sorte qu'un diamètre interne (54) dudit joint d'étanchéité (42) est plus grand au niveau d'un point à proximité de ladite première partie (24) de ladite surface (22) qu'au niveau d'un point distal par rapport à celle-ci.

7. Raccord (10) selon l'une des revendications 4 à 6, ladite surface interne (46) dudit joint d'étanchéité (42) comprenant en outre un second méplat (58) positionné à proximité de ladite deuxième partie (28) de ladite surface (22), ledit second méplat (58) étant orienté angulairement par rapport audit axe (40) de telle sorte qu'un diamètre interne (60) dudit joint d'étanchéité (42) est plus grand au niveau d'un point à proximité de ladite entrée (16) qu'au niveau d'un point distal par rapport à celle-ci, en particulier ledit second méplat (58) présentant une aire de surface (62) plus grande qu'une aire de surface (64) dudit premier méplat (52).

8. Raccord (10) selon la revendication 6, comprenant en outre un gicleur (12) ou un autre composant de régulation de fluide logé par filetage à l'intérieur dudit trou (20) au niveau de ladite sortie (18), une extrémité dudit gicleur (12) venant en prise avec ledit premier méplat (52).

9. Raccord (10) selon la revendication 8, ledit gicleur (12) ou autre composant de régulation de fluide comprenant des filetages droits, en particulier des filetages NPSL, ou des filetages coniques.

10. Raccord (10) selon la revendication 8 ou 9, ladite extrémité dudit gicleur (12) comprenant un chanfrein (70), ledit chanfrein (70) présentant une orientation angulaire identique à celle dudit premier méplat (52).

11. Raccord (10) selon l'une des revendications 8 à 10, la mise en prise entre ledit gicleur (12) et ledit premier méplat (52) comprimant ledit joint d'étanchéité (42) contre ladite surface d'épaulement (38).

12. Raccord (10) selon la revendication 4, ladite surface externe (44) dudit joint d'étanchéité (42) présentant une longueur plus grande qu'une longueur de ladite troisième partie (30) de ladite surface (22).

13. Raccord (10) selon l'une des revendications précédentes, ledit raccord (10) comprenant un raccord réducteur, un raccord coudé, un raccord en T ou un raccord transversal.

14. Procédé de scellement d'un gicleur fileté (12) sur un raccord (10) selon l'une des revendications précédentes, le raccord (10) définissant un conduit (14) présentant une sortie filetée (18), un joint d'étanchéité (42) étant positionné à l'intérieur dudit conduit (14), ledit procédé étant **caractérisé en ce qu'**il comprend :
la rotation dudit gicleur fileté (12) à l'intérieur de ladite sortie filetée (18) de manière à faire avancer ledit gicleur (12) en prise avec un méplat orienté angulairement dudit joint d'étanchéité (42) ; et
la poursuite de la rotation dudit gicleur fileté (12) de manière à comprimer ledit joint d'étanchéité (42) à la fois longitudinalement à l'intérieur dudit conduit (14) et radialement vers l'extérieur contre ledit conduit (14).

15. Procédé selon la revendication 14, comprenant en outre la mise en prise de filetages dudit gicleur fileté (12) avec ledit méplat.
